# EUROPEAN PATENT APPLICATION

(11) **EP 4 378 720 A1**
(43) Date of publication of application: **05.06.2024**
(21) Application number: 22210108.1
(22) Date of filing: 29.11.2022
(51) Int. Cl.: B60G 17/052, B60G 11/27, B60G 99/00, F16K 17/04, F16K 24/04, F16K 15/02, F16K 27/02

(54) **PNEUMATIC PORT, IN PARTICULAR EXHAUST PORT FOR A BELLOW SERVO VALVE OF AN AIR SPRING DEVICE, SUSPENSION SYSTEM AND COMMERCIAL VEHICLE**

(71) Applicant: ZF CV Systems Europe BV, 1170 Brüssel (BE)
(72) Inventor: REPELA, Marek, 53-031 Wroclaw (PL)
(74) Representative: Ohlendorf, Henrike

(57) **Abstract**

The invention is directed to a pneumatic port (100), in particular an exhaust port for use in a bellow servo valve (200) of a suspension system (300), the pneumatic port comprising a port body (102) having a through opening (104), a valve body (110) arranged inside the through opening and having a piston (112) that is configured to actuate against a spring element (114) to control a flow path (116) through the through opening and a washer unit (120) arranged at the through opening and including a passage (122) for enabling a flow of air through the washer unit. The washer unit is connected to the port body using a connection element. In the pneumatic port the connection element is a cooperating thread (126, 128) arranged at the port body and at the washer unit, thereby reducing the generation of noise when air flows through the pneumatic port.

## Description

The present invention is directed to a pneumatic port, in particular an exhaust port for use in a bellow servo valve of a suspension system of a commercial vehicle. The invention is also directed to a bellow servo valve, to an air spring device, to a suspension system and to a commercial vehicle.

Typically, pneumatic ports, in particular exhaust ports, include a port body having a through opening and a valve body arranged inside the through opening and having a piston that is configured to actuate against a spring element to control a flow path through the through opening. The pneumatic ports also comprise a washer unit arranged at the through opening and including at least one passage for enabling a flow of air through the washer unit. The washer unit typically comprises a washer, such as a step washer and a connection element in the form of a retaining ring that is mounted by applying pressure.

It would be beneficial to provide a better mounting control of the washer unit. Further, it would be beneficial to reduce noise generation in the pneumatic port, in particular during air flow.

It is therefore an object of the present invention to provide a pneumatic port capable of providing a solution to at least one of the problems stated above.

According to a first aspect of the invention, a pneumatic port is described. The pneumatic port is particularly suitable to be used as an exhaust port for use in a bellow servo valve, for example for a suspension system of a commercial vehicle. The pneumatic port comprises a port body having a through opening and a valve body that is arranged inside the through opening and that includes a piston that is configured to actuate against a spring element to control, i.e. to open and close, a flow path through the through opening. The pneumatic port also includes a washer unit that is arranged at the through opening and has at least one passage for enabling a flow of air through the washer unit. In the pneumatic port according to the invention, the washer unit is connected to the port body using a connection element, wherein the connection element is a cooperating thread arranged at the port body and at the washer unit.

Thus, the pneumatic port of the first aspect of the invention provides an easier fit providing a better mounting control than the retaining ring. Further, the threaded connection element avoids looseness of the washer unit and reduces or minimizes the gaps existing between washer unit and port body, which in turn reduces the generation of noise.

In the following, developments of the pneumatic port of the first aspect of the invention will be described.

In a particularly preferred development, the washer unit consist of a single washer element having a thread arranged on an outer peripheral wall of the washer element and configured to cooperate with the thread of the port body, which is arranged at an inner peripheral wall at the distal end of the port body. Thus, by providing a single washer element instead of a washer unit comprising a washer and a retaining ring, the production cost of the pneumatic port can be reduced.

In a development, the through opening is arranged in a longitudinal direction and has a proximal end and a distal end opposite to the proximal end along the longitudinal direction.

In another development, the washer unit, in particular the single washer element, is a step washer having a protruding section on a proximal end, which, in a threaded state, is arranged to face the piston of the valve body.

In yet another embodiment, the washer unit, in particular the single washer element, comprises a recess on a distal end, which, in a threaded state, is arranged to face away from the piston of the valve body and which is configured to receive a fastening tool for fastening the threaded washer element to the threaded port body.

In a development, the through opening of the port body comprises a middle section that is arranged between a proximal end and a distal end of the through opening and arranged and configured to receive the valve body. Also preferably, a gasket, in particular a toric joint or o-ring is arranged between an outer peripheral wall of the valve body and an inner wall of the middle section of the port body and configured to be compressed during assembly of the valve body thus forming a seal at the interface, which prevents air flow along the outer walls of the valve body.

In yet another development, a cross section of the proximal end of the through opening, determined perpendicular to the longitudinal direction, is smaller than a cross section of the middle section of the through opening, also determined perpendicular to the longitudinal direction, which is in turn smaller than a cross section of the distal section of the through opening, also determined perpendicular to the longitudinal direction. The valve body may be designed and arranged so that a proximal end of the valve body rests on a first step formed by the proximal end and the middle section of the through opening. Also, in an inserted state, the washer unit, in particular a single washer element may be designed and configured to rest on a second step formed by the middle section and the distal end of the through opening. The middle section can have a substantially constant cross-sectional area or may include two or more subsections with constant but different cross-sectional area that create one or more steps or may have at least one section with a continuously changing cross-sectional area.

The gasket may be arranged in the vicinity or adjacent to a step in the middle section.

A second aspect of the present invention is formed by a bellow servo valve, in particular for a suspension system of a commercial vehicle. The bellow servo valve comprises a connection port that is configured to receive a pressure supply and a pneumatic port in accordance with the first aspect of the invention and arranged as an exhaust port. The connection port is pneumatically connected to a proximal end of the through opening. The bellow servo valve of the second aspect thus shares the advantages of the pneumatic port of the first aspect of the invention

A third aspect of the present invention is formed by a suspension system, in particular for a commercial vehicle. The suspension system comprises a compressed air supply unit, such as, for example, a compressor, and a bellow serve valve according to the second aspect, typically as part of an air spring device. In the suspension system, the connection port is pneumatically connected to the compressed air supply unit and configured to receive compressed air from the compressed air supply unit. The suspension system of the third aspect thus shares the advantages of the pneumatic port of the first aspect of the invention.

According to a fourth aspect of the present invention, a commercial vehicle is described. The commercial vehicle comprises a suspension system according to the third aspect of the invention and therefore, it shares the advantages of the pneumatic port of the first aspect.

A further aspect of the invention is formed by an air spring device, comprising a first connection element arranged and configured to be connected to a chassis of a commercial vehicle, a second connection element arranged and configured to be connected to a cabin of the commercial vehicle and an air bellow arranged between the first connection element and the second connection element, the air spring device comprising a bellow serve valve for controlling flow of air to and from the air bellow.

These and other aspects of the invention will be apparent from and elucidated with reference to the embodiments described hereinafter.

The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regards to additions to the lessons immediately recognizable from the drawings, reference is made to the relevant state of the art.

It should be borne in mind that numerous modifications and changes can be made to the form and detail of an embodiment without deviating from the general idea of the invention. The features of the invention disclosed in the description, in the drawings and in the claims may be essential for the further development of the invention, either individually or in any combination.

In addition, all combinations of at least two of the features disclosed in the description, drawings and/or claims fall within the scope of the invention. The general idea of the invention is not limited to the exact form or detail of the preferred embodiment shown and described below or to an object which would be limited in comparison to the object claimed in the claims. For specified design ranges, values within the specified limits are also disclosed as limit values and thus arbitrarily applicable and claimable.

The following drawings show in:
- Fig. 1: a schematic diagram of a comparative example of a pneumatic port having a two-part washer unit;
- Fig. 2: a schematic diagram of an embodiment of a pneumatic port in accordance with the invention;
- Fig. 3: a cross-sectional view of a port body for use in a pneumatic port according to the invention;
- Fig. 4: two views of a single washer element for use in the pneumatic port according to the invention and a fastening tool;
- Fig. 5: a front view, a rear view and a side view of a single washer element for use in the pneumatic port according to the invention;
- Fig. 6a: a top view of an air spring device that includes a bellow servo valve including a pneumatic port according to the invention as an exhaust port;
- Fig. 6b: a lateral view of an air spring device that includes a bellow servo valve including a pneumatic port according to the invention as an exhaust port; and
- Fig. 7: a schematic block diagram of a commercial vehicle comprising a suspension system in accordance with the invention.

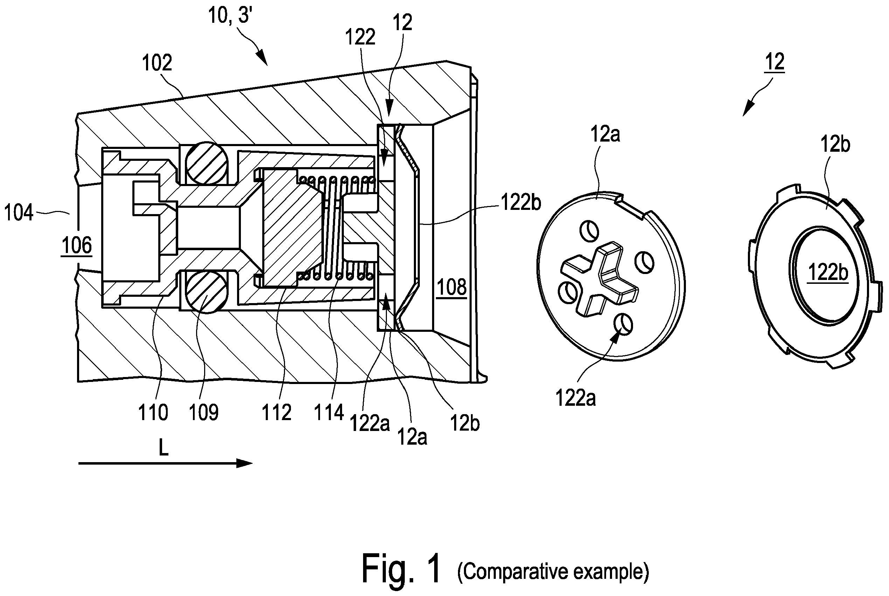

Fig. 1 shows a schematic diagram of a comparative example of a pneumatic port 10, in particular an exhaust port 3' having a two-part washer unit 12 with a step washer 12.a and a retaining ring 12.b. The pneumatic port 10 comprises a port body 102 having a through opening 104, in particular a through opening extending in a longitudinal direction L and having a proximal end 106 and a distal end 108, in view of a flow direction. The pneumatic port 10 also includes a valve body 110 that is arranged inside the through opening 104 and that includes a piston 112 that is configured to actuate against a spring element 114 to control a flow path through the through opening 104. The pneumatic port 10 also includes a washer unit 12 that is arranged at the through opening 104, in particular at the distal end 108 of the port body 102. The washer unit 12 comprises a step washer 12a and a retaining ring 12.b. The step washer 12.a has a plurality of openings 122a and the retaining ring 12b has a central opening 122b. The openings 122a and 122b, when the washer unit 12 is in an inserted state, form a passage for enabling a flow of air through the washer unit 12. The step washer 12.a is fixed to the port body 102 by means of the retaining ring 12b, which is mounted by applying pressure. However, this type of washer unit 12 generates noise during air flow.

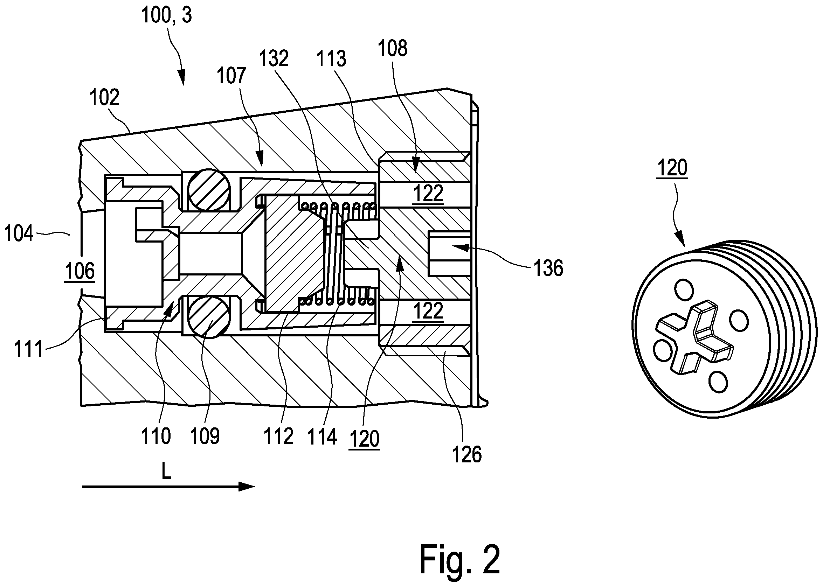

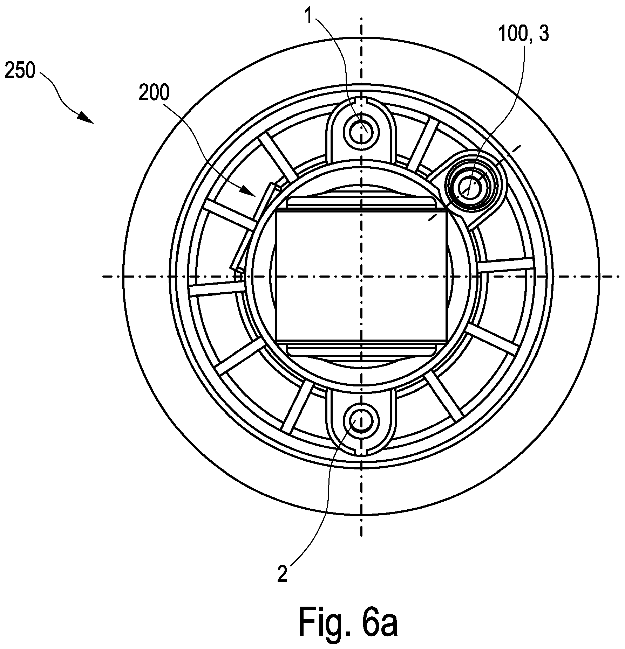

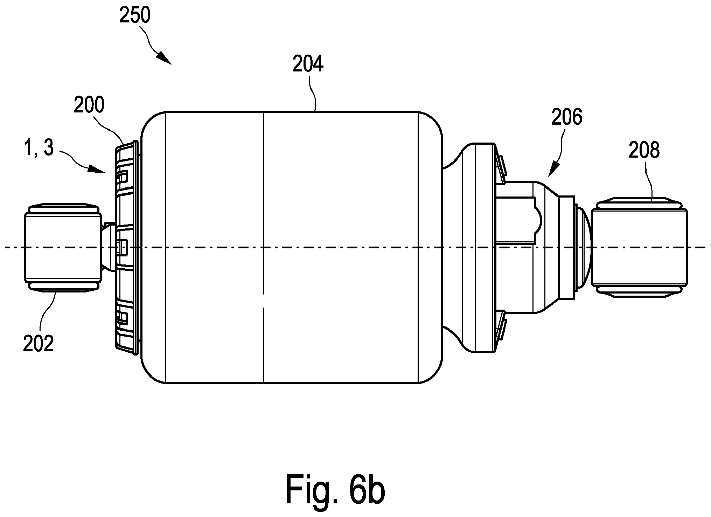

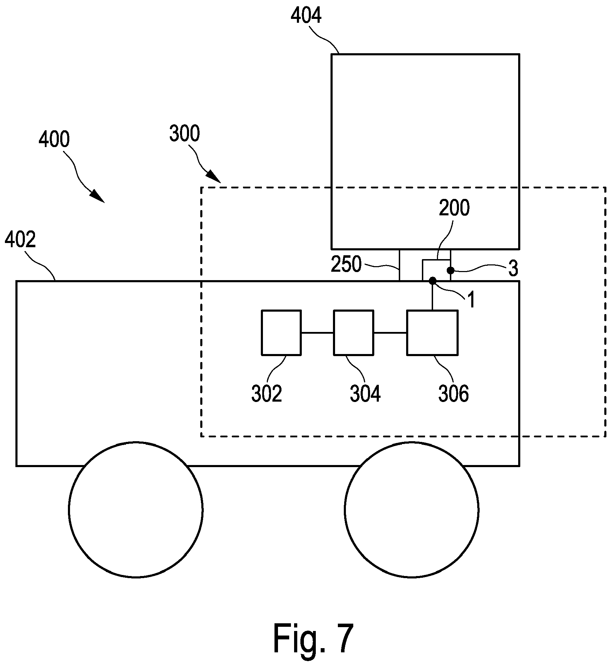

Fig. 2 shows a schematic diagram of an embodiment of a pneumatic port 100, in particular an exhaust port 3, in accordance with the invention. The pneumatic port 100 is particularly used as an exhaust port 3 in valve elements, in particular a bellow servo valve of an air spring device (see Fig. 6 and Fig. 7 and the corresponding description), to achieve a reduction of the noise generated during exhaust.

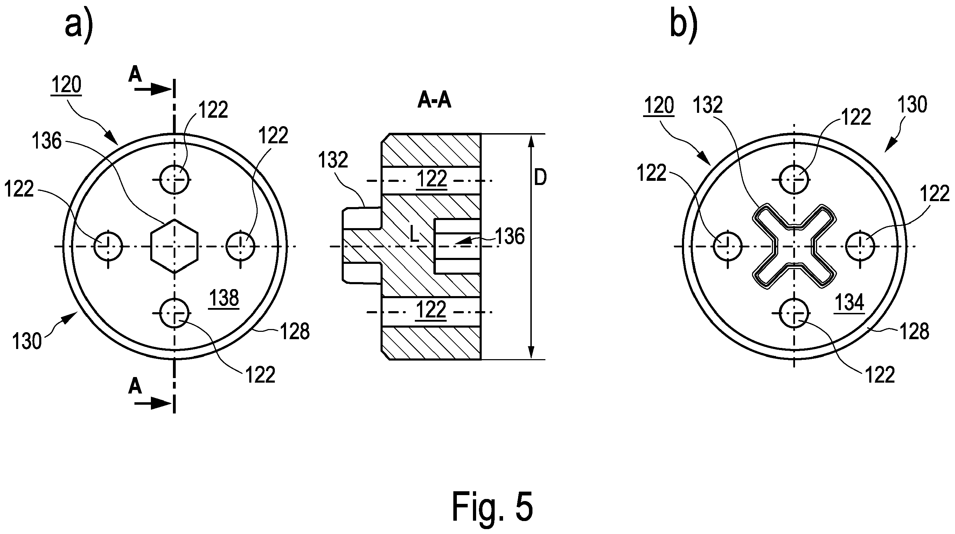

Similarly to the pneumatic port 10 of Fig. 1, the pneumatic port 100 comprises a port body 102 having an through opening 104, a valve body 110 arranged inside the through opening 104 and having a piston 112 that is configured to actuate against a spring element 114 to control a flow path (see Fig. 5,116) through the through opening 104, and a washer unit 120 that is arranged at the through opening 104 and that includes at least one passage 122 for enabling a flow of air through the washer unit 120. In the pneumatic port 100 of Fig. 2, the washer unit is connected to the port body using a connection element, the connection element being a cooperating thread arranged at the port body 102 and at the washer unit 120. Providing a threaded connections facilitates a faster and better mounting of the parts in the pneumatic port. An easier mounting control is provided by the threaded connection by torque wrench. Also, a washer unit as a single washer element 120 reduces the production costs. The step threaded washer can be used in valves when there is a need to decrease or reduce noise during air flow. The cancellation of gaps between the port body and the washer element results in a reduction of the generated noise.

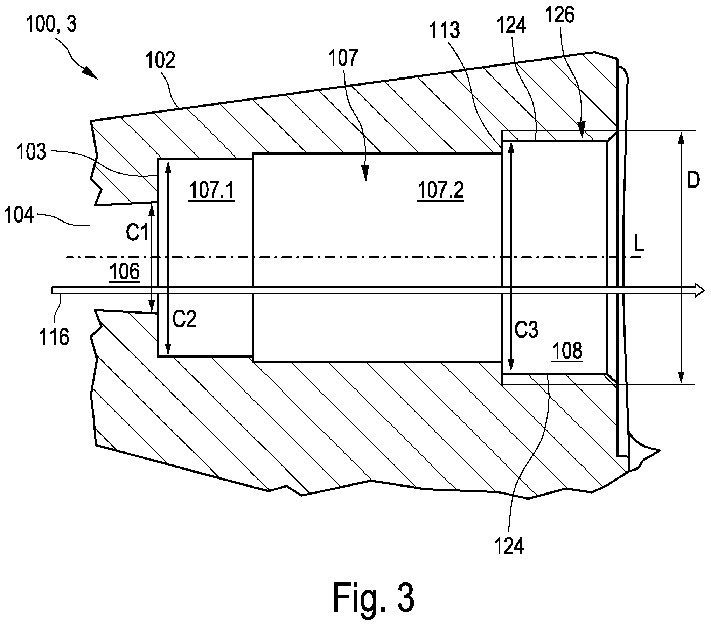

A more detailed view of the port body 102 of the pneumatic port 100, or exhaust port 3, is shown in Fig. 3. The port body 102 is shown without the valve body or the washer unit. The through opening 104 is arranged in a longitudinal direction L and has a proximal end 106 and a distal end 108 opposite to the proximal end 106 along the longitudinal direction L. The through opening 104 of the port body 102 also comprises a middle section 107, 107.1, 107.2 arranged between the proximal end 106 and the distal end 108 and arranged to receive the valve body (110, see Fig. 2). In this particular embodiment of the port body 102, a cross-sectional area C1 of the proximal end 106 of the through opening 104, perpendicular to the longitudinal direction L, is smaller than a cross-sectional area C2 of the middle section 107 of the through opening 104, perpendicular to the longitudinal direction L, which is in turn smaller than a cross-sectional area C3 of the distal section 108 of the through opening 104, perpendicular to the longitudinal direction L. This creates a first step 103 at the place where the proximal end 106 meets the middle section 107.1 of the through opening 104. As shown in Fig. 2, the valve body 110, in particular a proximal end of the valve body 111, rests on this first step 103. Also, a second step 113 is created at the place where the middle section 107.2 meets the distal end 108 of the through opening 104. The washer unit 120 is arranged and configured to rest, in an inserted state, on this second step 113 (see Fig. 2). The port body 102 includes a thread 126 that is arranged at an inner peripheral wall 124 at the distal end 108 of the port body 102 and extends until the second step 113. The middle section 107 can have a substantially constant cross-sectional area or may include two or more subsections 107.1, 107.2 with constant but different cross sectional areas that create one or more steps or may have at least one section with a continuously changing cross sectional area. A gasket that is in particular a toric joint or o-ring 109 is arranged between an outer peripheral wall of the valve body 110 and an inner wall of the middle section 107 of the port body 102 and configured to be compressed during assembly of the valve body 110 thus forming a seal at the interface, which prevents air flow along the outer walls of the valve body 110. As shown in Fig. 2, the gasket 109 is arranged in the vicinity or adjacent to a step in the middle section 107.

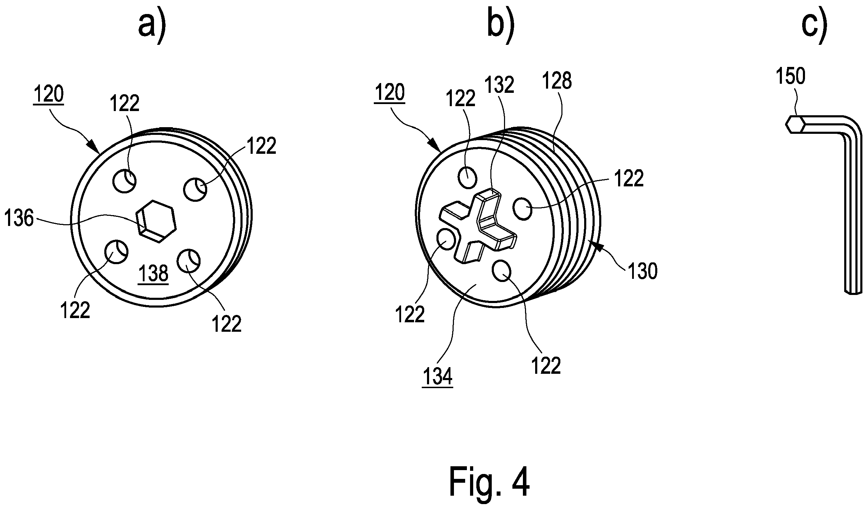

Fig. 4 shows two views of a single washer element 120 for use in the pneumatic port 100 according to the invention. The rear side, i.e., the side that in an inserted state faces away from the valve body as shown in Fig. 4a) and the front side, i.e., the side that in an inserted state faces the valve body is shown in Fig. 4b). The single washer element 120 is, in this particular embodiment, a step washer 120 having a protruding section 132 on a proximal end thereof 134, which, in a threaded state, is arranged to face the piston 112 of the valve body 110. The single washer element 120 comprises a thread 128 arranged on an outer peripheral wall 130 of the washer element 120 and configured to cooperate with the thread 126 of the port body 102 (see Fig. 3). The washer unit 120 comprises a recess 136 on a distal end 138, which, in a threaded state, is arranged to face away from the piston 112 of the valve body 110 and which is configured to receive a fastening tool 150, shown in Fig. 4c), for fastening the threaded washer element 120 to the threaded port body 102. The washer element 120 comprises four openings 122. Alternative washer elements may comprise a different number of openings.

Fig. 5 a) shows a front view, and a cross sectional side view of a single washer element 120 for use in the pneumatic port according to the invention. Fig. 5 b) shows a rear view thereof. The same reference numbers as those used for the description of Fig. 4 are used for the description of Fig. 5. The rear view (left) shows the recess 136 on the distal end 138, that is configured to receive the fastening tool. Also, the openings 122 are shown. The side view (in cross section) shown in the middle results from sectioning the washer element 120 along the plane A, shown in the left. The diameter D of the washer element 120 corresponds to the diameter D of the distal end 108 of the port body 102 (see Fig. 3). A front view of the washer element is shown in Fig. 5 (right).

Fig. 6a shows a top view of an air spring device 250, for instance use for a pneumatic suspension unit for a cabin of a commercial vehicle. The air spring device comprises a bellow servo valve 200 including a pneumatic port 100 according to the invention as an exhaust port 3. The bellow servo valve 200 can be used as part of a cabin air levelling module in the frame of a conventional air suspension control of a truck, bus or other commercial vehicle. The bellow servo valve 200 comprises a connection port 1 configured to receive a pressure supply and a pneumatic port 100 arranged as an exhaust port 3, wherein the connection port 1 is pneumatically connected to a proximal end 106 of the through opening 104 (see Fig. 2, Fig, 3). The schematic diagram shown in Fig. 6 corresponds to a bellow servo valve by WABCO, with product number 9640060220 (https://www.wabco-customercentre.com/catalog/docs/9640060220 005 dascheck -2_page-1---notset.tif.pdf). Port 1 is a connection for pressure supply, typically with a maximum permissible supply pressure of 12.5 bar. Port 2 has no function in the bellow serve valve, whereas the exhaust port 3 is a pneumatic port 100 according to the invention and it is used to exhaust air to the environment with reduced noise generation.

Fig. 6b) shows a lateral view of the air spring device 250 also shown in Fig. 6a in a top view. The air spring device 250 comprises a first connection element 202, an air bellow 204, a connection head 206 and a second connection element. A chassis of the vehicle and a cabin of the vehicle are connectable to the first and to the second connection elements 202, 208, such that a relative position between the chassis and the cabin can be controlled by means of the air bellow 204. The flow of air towards and out of the air bellow 204 is controlled by the bellow servo valve 200, which includes an exhaust port 3 in accordance with the invention as described above.

Fig. 7 shows a schematic block diagram of a commercial vehicle 400 comprising a suspension system 300 in accordance with the invention. The vehicle 400 comprises a chassis 402 and a cabin 404, which can be lifted or lowered using the suspension system 300. In particular, the suspension system 300 operates a so-called cabin air levelling module (CALM) that includes an air spring device 250 including a bellow servo valve 200. The CALM allows for mechanically based air levelling for truck cabins. The suspension system 300 comprises a compressed air supply 302, such as, for example, a compressor. The suspension system may also comprise an air-processing unit 304 that includes an airdrying unit, and typically a filtering unit. The suspension system 300 may also comprise an air-reservoir 306 for storing compressed dried air. The compressed dried air is provided to the bellow servo valve 200 for lifting the cabin 404 via the connection port 1. For lowering the cabin 404, air is exhausted from the air spring device 250 via the exhaust port 3 of the bellow serve valve 200.

In summary, the invention is directed to a pneumatic port, in particular an exhaust port for use in a bellow servo valve of a suspension system, the pneumatic port comprising a port body having an through opening, a valve body arranged inside the through opening and having a piston that is configured to actuate against a spring element to control a flow path through the through opening and a washer unit arranged at the through opening and including a passage for enabling a flow of air through the washer unit; wherein the washer unit is connected to the port body using a connection element. In the pneumatic port the connection element is a cooperating thread arranged at the port body and at the washer unit, thereby reducing the generation of noise when air flows through the pneumatic port.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

### LIST OF REFERENCE SIGNS (PART OF THE DESCRIPTION)

- 1: Connection port of bellow servo valve
- 2: Unused port of bellow servo valve
- 3: Exhaust port
- 10: Comparative example of pneumatic port
- 12: Two-part washer unit
- 12a: Step washer
- 12b: Retaining ring
- 102: Port body
- 103: First step
- 104: Through opening
- 106: Proximal end of through opening
- 107: Middle section
- 107.1: Subsection of middle section
- 107.2: Subsection of middle section
- 108: Distal end of through opening
- 109: Gasket, toric joint
- 110: Valve body
- 111: Proximal end of valve body
- 112: Piston
- 113: Second step
- 114: Spring element
- 116: Air flow
- 120: Washer unit
- 122: Passage/opening
- 122a: Opening of step washer
- 122b: Opening of retaining ring
- 124: Inner peripheral wall of port body
- 126: Thread at port body
- 128: Thread at washer unit
- 130: Outer peripheral wall of washer
- 132: Protruding section of washer
- 134: Proximal end of washer
- 136: Recess of washer
- 138: Distal end of washer
- 150: Fastening tool
- 200: Bellow servo valve
- 202: First connection element
- 204: Air bellow
- 206: Connection head
- 208: Second connection element
- 250: Air spring device
- 300: Suspension system
- 302: Compressed air supply/compressor
- 304: Air processing unit/air drying unit/filter
- 306: Compressed air reservoir
- 400: Vehicle
- 402: Chassis
- 404: Cabin
- A: Cutting plane for cross-sectional side view
- C1: Cross-sectional area
- C2: Cross-sectional area
- C3: Cross-sectional area
- D: Diameter of washer/of distal end of port body
- L: Longitudinal direction

## Claims

1. Pneumatic port (100), in particular an exhaust port (3) for use in a bellow servo valve (200) of a suspension system (300) of a commercial vehicle (400), the pneumatic port (100) comprising:
- a port body (102) having a through opening (104);
- a valve body (110) arranged inside the through opening (104) and having a piston (112) that is configured to actuate against a spring element (114) to control a flow path (116) through the through opening (104); and
- a washer unit (120) arranged at the through opening (104) and including at least one passage (122) for enabling a flow of air through the washer unit (120); wherein the washer unit is connected to the port body using a connection element;
**characterized in that** the connection element is a cooperating thread (126, 128) arranged at the port body (102) and at the washer unit (120).

2. The pneumatic port (100) of claim 1, wherein the washer unit (120) consist of a single washer element (120) having a thread (128) arranged on an outer peripheral wall (130) of the washer element (120) and configured to cooperate with the thread (126) of the port body, which is arranged at an inner peripheral wall (124) at the distal end (108) of the port body (102).

3. The pneumatic port (100) of claim 1 or 2, wherein the through opening (104) is arranged in a longitudinal direction (L) and has a proximal end (106) and a distal end (108) opposite to the proximal end (106) along the longitudinal direction (L).

4. The pneumatic port (100) of any of the preceding claims, wherein the washer unit, in particular a single washer element (120), is a step washer (120) having a protruding section (132) on a proximal end (134), which, in a threaded state, is arranged to face the piston (112) of the valve body (110).

5. The pneumatic port (100) of any of the preceding claims, wherein the washer unit, in particular the single washer element (120), comprises a recess (136) on a distal end (138), which, in a threaded state, is arranged to face away from the piston (112) of the valve body (110) and which is configured to receive a fastening tool (150) for fastening the threaded washer element (120) to the threaded port body (102).

6. The pneumatic port (100) of any of the preceding claims, wherein the through opening (104) of the port body (102) comprises a middle section (107, 107.1, 107.2) arranged between a proximal end (106) and a distal end (108) and arranged to receive the valve body (110).

7. The pneumatic port (100) of claim 6, wherein a cross sectional area (C1) of the proximal end (106) of the through opening (104), perpendicular to the longitudinal direction (L), is smaller than a cross sectional area (C2) of the middle section (107) of the through opening (104), perpendicular to the longitudinal direction (L), which is in turn smaller than a cross sectional area (C3) of the distal section (108) of the through opening (104), perpendicular to the longitudinal direction (L).

8. The pneumatic port (100) of claim 7, wherein a proximal end (111) of the valve body (110) rests on a first step (103) formed by the proximal end (106) and the middle section (107.1) of the through opening (104).

9. The pneumatic port (100) of claim 7 or 8, wherein, in an inserted state, the washer unit, in particular a single washer element (120), rests on a second step (113) formed by the middle section (107.2) and the distal end (108) of the through opening (104).

10. Bellow servo valve (200) for a suspension system (300) of a commercial vehicle (400), the bellow servo valve comprising a connection port (1) configured to receive a pressure supply and a pneumatic port (100) in accordance with any of the preceding claims and arranged as an exhaust port (3), wherein the connection port (1) is pneumatically connected to a proximal end (106) of the through opening (104).

11. Air spring device (250), comprising a first connection element (202) arranged and configured to be connected to a chassis (402) of a commercial vehicle (400), a second connection element (208) arranged and configured to be connected to a cabin (404) of the commercial vehicle (400) and an air bellow (204) arranged between the first connection element (202) and the second connection element (208), the air spring device comprising a bellow serve valve (200) for controlling flow of air to and from the air bellow (204).

12. Suspension system (300) for a commercial vehicle (400) comprising a compressed air supply (302) unit and an air spring device (250) according to claim 11, wherein the connection port (1) is pneumatically connected to the compressed air supply unit (302) and configured to receive compressed air from the compressed air supply unit (302).

13. Commercial vehicle (400) comprising a suspension system (300) according to claim 12.
